(19) **Europäisches Patentamt**
**European Patent Office**
**Office européen des brevets**

(11) **EP 3 918 101 B1**

(12) **FASCICULE DE BREVET EUROPEEN**

(45) Date de publication et mention
de la délivrance du brevet:
**11.09.2024   Bulletin 2024/37**

(51) Classification Internationale des Brevets (IPC):
**C22C 19/05** *(2006.01)*      **F01D 5/28** *(2006.01)*

(21) Numéro de dépôt: **20707304.0**

(52) Classification Coopérative des Brevets (CPC):
**C22C 19/057; F01D 5/28;** F05D 2240/12;
F05D 2300/175; Y02T 50/60

(22) Date de dépôt: **15.01.2020**

(86) Numéro de dépôt international:
**PCT/FR2020/050052**

(87) Numéro de publication internationale:
**WO 2020/157406 (06.08.2020 Gazette 2020/32)**

(54) **SUPERALLIAGE A BASE DE NICKEL A TENUE MECANIQUE ET ENVIRONNEMENTALE ELEVEE A HAUTE TEMPERATURE ET A FAIBLE DENSITE**

SUPERLEGIERUNG AUF NICKELBASIS MIT MIT HOHER MECHANISCHER FESTIGKEIT UND HOHER BESTÄNDIGKEIT GEGEN UMWELTEINFLÜSSE BEI HOHER TEMPERATUR UND MIT GERINGER DICHTE

NICKEL BASED SUPERALLOY WITH HIGH MECHANICAL AND ENVIRONMENTAL STRENGTH AT ELEVATED TEMPERATURE AND LOW DENSITY

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(72) Inventeurs:
• **RAME, Jérémy**
  **77550 MOISSY-CRAMAYEL (FR)**
• **MENOU, Edern**
  **77550 MOISSY-CRAMAYEL (FR)**

(30) Priorité:  **31.01.2019   FR 1900915**

(43) Date de publication de la demande:
**08.12.2021   Bulletin 2021/49**

(73) Titulaire: **SAFRAN**
**75015 Paris (FR)**

(74) Mandataire: **Cabinet Beau de Loménie**
**158, rue de l'Université**
**75340 Paris Cedex 07 (FR)**

(56) Documents cités:
EP-A1- 0 971 041       WO-A1-02/070764
WO-A1-02/22901        WO-A1-2018/078269
WO-A1-94/00611

**Description**

Domaine Technique

La présente invention se rapporte au domaine général des superalliages à base de nickel pour des turbomachines, notamment pour les aubes fixes, aussi appelées distributeurs ou redresseurs, ou les aubes mobiles, ou encore les segments d'anneau.

Technique antérieure

Les superalliages à base de nickel sont généralement utilisés pour les parties chaudes des turbomachines, c'est-à-dire les parties des turbomachines situées en aval de la chambre de combustion.

Les superalliages à base de nickel ont pour principaux avantages de combiner à la fois une résistance au fluage élevée aux températures comprises entre 650°C et 1200°C, ainsi qu'une résistance à l'oxydation et à la corrosion.

La tenue aux hautes températures est principalement due à la microstructure de ces matériaux, qui est composée d'une matrice $\gamma$-Ni de structure cristalline cubique à faces centrées (CFC) et de précipités durcissants ordonnés $\gamma'$-Ni3Al de structure L12.

Certaines nuances de superalliages à base de nickel sont employées pour la fabrication de pièces monocristallines.

On connait par exemple le document WO 2018/078269 qui décrit un superalliage à base de nickel adapté pour la fabrication d'aubes.

On connait le document déposé le 14/11/2017 sous le numéro FR1760675, et le document déposé le 14/11/2018 sous le numéro PCT/FR2018/052840, qui décrivent un superalliage à base de nickel permettant d'améliorer les caractéristiques mécaniques du superalliage par rapport aux superalliages existants.

Par rapport au superalliage décrit dans le document déposé sous le numéro FR1760675 et le document déposé sous le numéro PCT/FR2018/052840, le but recherché est de diminuer la masse volumique du superalliage. En outre, un autre but recherché par rapport à ces documents est de simplifier la mise en oeuvre des traitements qui peuvent être réalisés sur le superalliage, et notamment les traitements thermiques. Enfin, un autre but recherché est d'améliorer la stabilité microstructurale en température.

Exposé de l'invention

La présente invention a pour donc pour objectif de proposer des compositions de superalliages à base de nickel qui permettent d'atteindre les buts cités précédemment.

Selon un premier aspect, l'invention propose un superalliage à base de nickel comprenant, en pourcentages massiques, 5,9 à 6,5% d'aluminium, 9,5 à 10,5% de cobalt, 4 à 5% de chrome, 0,1 à 0,2% de hafnium, 0,3 à 0,7% de molybdène, 3,7 à 4,5% de rhénium, 7,5 à 8,5% de tantale, 0,2 à 0,7% de titane, 3,2 à 4% de tungstène, 0 à 0,1% de silicium, le complément étant constitué de nickel et des impuretés inévitables.

On définit par alliage à base de nickel un alliage dont le pourcentage massique en nickel est majoritaire.

On définit les impuretés inévitables comme les éléments qui ne sont pas ajoutés de manière intentionnelle dans la composition et qui sont apportés avec d'autres éléments. Parmi les impuretés inévitables, on peut notamment citer le carbone (C) ou le soufre (S).

Le superalliage à base de nickel selon l'invention dispose d'une bonne stabilité microstructurale en température, permettant ainsi d'obtenir des caractéristiques mécaniques élevées en température. Le superalliage est notamment dépourvu de phase topologiquement compacte (TCP).

Le superalliage à base de nickel selon l'invention permet de disposer d'une masse volumique inférieure à 8,75 g.cm$^{-3}$.

Le superalliage à base de nickel selon l'invention permet d'obtenir une différence entre la température de solvus des précipités $\gamma'$ et la température de solidus d'au moins 7,5°C, simplifiant ainsi la mise en oeuvre detraitement thermique.

Le superalliage à base de nickel selon l'invention dispose d'une bonne résistance à la corrosion et d'une résistance à l'oxydation.

Le superalliage à base de nickel selon l'invention permet de réduire la sensibilité à la formation de défauts de fonderie.

Selon une variante possible, le superalliage peut comprendre, en pourcentages massiques, 6,1 à 6,5% d'aluminium, 9,5 à 10,5% de cobalt, 4 à 5% de chrome, 0,1 à 0,2% de hafnium, 0,3 à 0,7% de molybdène, 3,7 à 4,5% de rhénium, 7,5 à 8,5% de tantale, 0,2 à 0,7% de titane, 3,2 à 4% de tungstène, 0 à 0,1% de silicium, le complément étant constitué de nickel et des impuretés inévitables.

Selon une variante possible, le superalliage peut comprendre, en pourcentages massiques, 5,9 à 6,5% d'aluminium, 9,5 à 10,5% de cobalt, 4 à 5% de chrome, 0,1 à 0,2% de hafnium, 0,3 à 0,7% de molybdène, 3,7 à 4,5% de rhénium, 7,5 à 7,9% de tantale, 0,2 à 0,7% de titane, 3,2 à 4% de tungstène, 0 à 0,1% de silicium, le complément étant constitué de nickel et des impuretés inévitables.

Par ailleurs, le superalliage peut comprendre, en pourcentages massiques, 6,1 à 6,5% d'aluminium, 9,5 à 10,5% de cobalt, 4 à 5% de chrome, 0,1 à 0,2% de hafnium, 0,3 à 0,7% de molybdène, 3,7 à 4,5% de rhénium, 7,5 à 7,9% de tantale, 0,2 à 0,7% de titane, 3,2 à 4% de tungstène, 0 à 0,1% de silicium, le complément étant constitué de nickel et des impuretés inévitables.

Selon une variante possible, le superalliage peut également comprendre, en pourcentages massiques, 6,1 à 6,5% d'aluminium, 9,5 à 10% de cobalt, 4 à 5% de chrome, 0,1 à 0,2% de hafnium, 0,3 à 0,7% de molybdène, 3,7 à 4,5% de rhénium, 7,5 à 7,9% de tantale, 0,2 à 0,7% de titane, 3,2 à 4% de tungstène, 0 à 0,1% de silicium, le complément étant constitué de nickel et des impuretés inévitables.

Selon une variante possible, le superalliage peut comprendre, en pourcentages massiques, 6,1 à 6,3% d'aluminium, 9,5 à 10% de cobalt, 4 à 5% de chrome, 0,1 à 0,2% de hafnium, 0,3 à 0,7% de molybdène, 3,7 à 4,5% de rhénium, 7,5 à 7,9% de tantale, 0,2 à 0,7% de titane, 3,2 à 4% de tungstène, 0 à 0,1% de silicium, le complément étant constitué de nickel et des impuretés inévitables.

Selon une variante possible, le superalliage peut comprendre, en pourcentages massiques, 6,1 à 6,3% d'aluminium, 9,5 à 10% de cobalt, 4 à 5% de chrome, 0,1 à 0,2% de hafnium, 0,3 à 0,7% de molybdène, 3,7 à 4,5% de rhénium, 7,5 à 7,9% de tantale, 0,3 à 0,6% de titane, 3,2 à 4% de tungstène, 0 à 0,1% de silicium, le complément étant constitué de nickel et des impuretés inévitables.

Selon une variante possible, le superalliage peut comprendre, en pourcentages massiques, 6,1 à 6,5% d'aluminium, 9,5 à 10% de cobalt, 4 à 5% de chrome, 0,1 à 0,2% de hafnium, 0,3 à 0,7% de molybdène, 3,7 à 4,5% de rhénium, 7,5 à 7,9% de tantale, 0,3 à 0,6% de titane, 3,2 à 4% de tungstène, 0 à 0,1% de silicium, le complément étant constitué de nickel et des impuretés inévitables.

Selon une variante possible, le superalliage peut comprendre, en pourcentages massiques, 6,1 à 6,3% d'aluminium, 9,5 à 10% de cobalt, 4 à 5% de chrome, 0,1 à 0,2% de hafnium, 0,3 à 0,7% de molybdène, 3,7 à 4,5% de rhénium, 7,5 à 7,9% de tantale, 0,3 à 0,6% de titane, 3,2 à 4% de tungstène, 0 à 0,1% de silicium, le complément étant constitué de nickel et des impuretés inévitables.

Selon une variante possible, le superalliage peut comprendre, en pourcentages massiques, 6,1 à 6,3% d'aluminium, 9,5 à 10% de cobalt, 4 à 5% de chrome, 0,1 à 0,2% de hafnium, 0,3 à 0,7% de molybdène, 3,7 à 4,5% de rhénium, 7,5 à 7,9% de tantale, 0,3 à 0,6% de titane, 3,4 à 3,8% de tungstène, 0 à 0,1% de silicium, le complément étant constitué de nickel et des impuretés inévitables.

Selon une variante possible, le superalliage peut comprendre, en pourcentages massiques, 6,1 à 6,3% d'aluminium, 9,5 à 10% de cobalt, 4 à 5% de chrome, 0,1 à 0,2% de hafnium, 0,3 à 0,7% de molybdène, 3,8 à 4,5% de rhénium, 7,5 à 7,9% de tantale, 0,3 à 0,6% de titane, 3,4 à 3,8% de tungstène, 0 à 0,1% de silicium, le complément étant constitué de nickel et des impuretés inévitables.

Selon une variante possible, le superalliage peut comprendre, en pourcentages massiques, 6,1 à 6,3% d'aluminium, 9,5 à 10% de cobalt, 4 à 5% de chrome, 0,1 à 0,2% de hafnium, 0,3 à 0,7% de molybdène, 3,8 à 4,5% de rhénium, 7,6 à 7,9% de tantale, 0,3 à 0,6% de titane, 3,4 à 3,8% de tungstène, 0 à 0,1% de silicium, le complément étant constitué de nickel et des impuretés inévitables.

Selon une variante possible, le superalliage peut comprendre, en pourcentages massiques, 6,1 à 6,3% d'aluminium, 9,5 à 10% de cobalt, 4,5 à 5% de chrome, 0,1 à 0,2% de hafnium, 0,3 à 0,7% de molybdène, 3,8 à 4,5% de rhénium, 7,6 à 7,9% de tantale, 0,3 à 0,6% de titane, 3,4 à 3,8% de tungstène, 0 à 0,1% de silicium, le complément étant constitué de nickel et des impuretés inévitables.

Selon une variante possible, le superalliage peut comprendre, en pourcentages massiques, 6,1 à 6,3% d'aluminium, 9,5 à 10% de cobalt, 4,5 à 4,7% de chrome, 0,1 à 0,2% de hafnium, 0,3 à 0,7% de molybdène, 3,8 à 4,5% de rhénium, 7,6 à 7,9% de tantale, 0,3 à 0,6% de titane, 3,4 à 3,8% de tungstène, 0 à 0,1% de silicium, le complément étant constitué de nickel et des impuretés inévitables.

Selon une variante possible, le superalliage peut comprendre, en pourcentages massiques, 6,1 à 6,3% d'aluminium, 9,5 à 10% de cobalt, 4,5 à 4,7% de chrome, 0,1 à 0,2% de hafnium, 0,3 à 0,7% de molybdène, 3,8 à 4,5% de rhénium, 7,6 à 7,9% de tantale, 0,35 à 0,55% de titane, 3,4 à 3,8% de tungstène, 0 à 0,1% de silicium, le complément étant constitué de nickel et des impuretés inévitables.

Selon une variante possible, le superalliage peut comprendre, en pourcentages massiques, 6,1 à 6,3% d'aluminium, 9,5 à 10% de cobalt, 4,5 à 4,7% de chrome, 0,1 à 0,2% de hafnium, 0,3 à 0,7% de molybdène, 3,8 à 4,5% de rhénium, 7,8 à 7,9% de tantale, 0,35 à 0,55% de titane, 3,4 à 3,8% de tungstène, 0 à 0,1% de silicium, le complément étant constitué de nickel et des impuretés inévitables.

Selon une variante possible, le superalliage peut comprendre, en pourcentages massiques, 6,1 à 6,3% d'aluminium, 9,5 à 10% de cobalt, 4,5 à 4,7% de chrome, 0,1 à 0,2% de hafnium, 0,4 à 0,6% de molybdène, 3,8 à 4,5% de rhénium, 7,8 à 7,9% de tantale, 0,35 à 0,55% de titane, 3,4 à 3,8% de tungstène, 0 à 0,1% de silicium, le complément étant constitué de nickel et des impuretés inévitables.

Selon une variante possible, le superalliage peut comprendre, en pourcentages massiques, 6,1 à 6,3% d'aluminium, 9,5 à 10% de cobalt, 4,5 à 4,7% de chrome, 0,1 à 0,2% de hafnium, 0,4 à 0,6% de molybdène, 3,8 à 4,3% de rhénium, 7,8 à 7,9% de tantale, 0,35 à 0,55% de titane, 3,4 à 3,8% de tungstène, 0 à 0,1% de silicium, le complément étant constitué de nickel et des impuretés inévitables.

Selon une variante possible, le superalliage peut comprendre, en pourcentages massiques, 6,1 à 6,3% d'aluminium, 9,5 à 10% de cobalt, 4,5 à 4,7% de chrome, 0,1 à 0,2% de hafnium, 0,4 à 0,6% de molybdène, 3,8 à 4,3% de rhénium, 7,8 à 7,9% de tantale, 0,35 à 0,55% de titane, 3,4 à 3,8% de tungstène, le complément étant constitué de nickel et des impuretés inévitables.

Selon une variante possible, le superalliage peut comprendre, en pourcentages massiques, 6,2% d'aluminium, 9,75% de cobalt, 4,6% de chrome, 0,14% de hafnium, 0,5% de molybdène, 4,1% de rhénium, 7,9% de tantale, 0,45% de titane, 3,6% de tungstène, le complément étant constitué de nickel et des impuretés inévitables.

Selon une caractéristique possible, le superalliage comprend une teneur en soufre inférieure ou égale à 2ppm en masse, de préférence inférieure ou égale à 1ppm en masse, et de manière encore plus préférentielle inférieure ou égale à 0,5ppm en masse.

Selon un deuxième aspect, l'invention propose une pièce de turbomachine en superalliage à base de nickel selon l'une quelconque des caractéristiques précédentes.

La pièce peut être un élément d'une turbine de turbomachine d'aéronef, par exemple une turbine haute-pression ou une turbine basse-pression, ou bien un élément de compresseur, et notamment de compresseur haute pression.

Selon une caractéristique additionnelle, la pièce de turbine ou de compresseur peut être une aube, ladite aube pouvant être une aube mobile ou une aube fixe, ou bien un secteur d'anneau.

Selon une autre caractéristique, la pièce de turbomachine est monocristalline, de préférence avec une structure cristalline orientée selon une direction cristallographique <001>.

Selon un troisième aspect, l'invention propose un procédé de fabrication d'une pièce de turbomachine en superalliage à base de nickel selon l'une quelconque des caractéristiques précédentes par fonderie.

Selon une caractéristique additionnelle, le procédé comprend une étape de solidification dirigée pour former une pièce monocristalline.

Description des modes de réalisation

Le superalliage selon l'invention comprend une base de nickel à laquelle sont associés des éléments d'addition majeurs.

Les éléments d'addition majeurs comprennent : le cobalt Co, le chrome Cr, le molybdène Mo, le tungstène W, l'aluminium Al, le tantale Ta, le titane Ti, et le rhénium Re.

Le superalliage peut également comprendre des éléments d'addition mineurs, qui sont des éléments d'addition dont le pourcentage maximum dans le superalliage ne dépasse pas 1% en pourcentage massique.

Les éléments d'addition mineurs comprennent : le hafnium Hf et le silicium Si.

Le superalliage à base de nickel comprend, en pourcentages massiques, 5,9 à 6,5% d'aluminium, 9,5 à 10,5% de cobalt, 4 à 5% de chrome, 0,1 à 0,2% de hafnium, 0,3 à 0,7% de molybdène, 3,7 à 4,5% de rhénium, 7,5 à 8,5% de tantale, 0,2 à 0,7% de titane, 3,2 à 4% de tungstène, 0 à 0,1% de silicium, le complément étant constitué de nickel et des impuretés inévitables.

Le superalliage à base de nickel peut également comprendre de manière avantageuse, en pourcentages massiques, 6,1 à 6,5% d'aluminium, 9,5 à 10,5% de cobalt, 4 à 5% de chrome, 0,1 à 0,2% de hafnium, 0,3 à 0,7% de molybdène, 3,7 à 4,5% de rhénium, 7,5 à 8,5% de tantale, 0,2 à 0,7% de titane, 3,2 à 4% de tungstène, 0 à 0,1% de silicium, le complément étant constitué de nickel et des impuretés inévitables.

Le superalliage à base de nickel peut également comprendre de manière avantageuse, en pourcentages massiques, 5,9 à 6,5% d'aluminium, 9,5 à 10,5% de cobalt, 4 à 5% de chrome, 0,1 à 0,2% de hafnium, 0,3 à 0,7% de molybdène, 3,7 à 4,5% de rhénium, 7,5 à 7,9% de tantale, 0,2 à 0,7% de titane, 3,2 à 4% de tungstène, 0 à 0,1% de silicium, le complément étant constitué de nickel et des impuretés inévitables.

Le superalliage à base de nickel peut également comprendre de manière avantageuse, en pourcentages massiques, 6,1 à 6,5% d'aluminium, 9,5 à 10,5% de cobalt, 4 à 5% de chrome, 0,1 à 0,2% de hafnium, 0,3 à 0,7% de molybdène, 3,7 à 4,5% de rhénium, 7,5 à 7,9% de tantale, 0,2 à 0,7% de titane, 3,2 à 4% de tungstène, 0 à 0,1% de silicium, le complément étant constitué de nickel et des impuretés inévitables.

Le superalliage à base de nickel peut également comprendre de manière avantageuse, en pourcentages massiques, 6,1 à 6,5% d'aluminium, 9,5 à 10,5% de cobalt, 4 à 5% de chrome, 0,1 à 0,2% de hafnium, 0,3 à 0,7% de molybdène, 3,7 à 4,5% de rhénium, 7,5 à 7,9% de tantale, 0,2 à 0,7% de titane, 3,2 à 4% de tungstène, le complément étant constitué de nickel et des impuretés inévitables.

Le superalliage peut également comprendre, de manière avantageuse, en pourcentages massiques, 6,1 à 6,5% d'aluminium, 9,5 à 10% de cobalt, 4 à 5% de chrome, 0,1 à 0,2% de hafnium, 0,3 à 0,7% de molybdène, 3,7 à 4,5% de rhénium, 7,5 à 7,9% de tantale, 0,2 à 0,7% de titane, 3,2 à 4% de tungstène, 0 à 0,1% de silicium, le complément étant constitué de nickel et des impuretés inévitables.

Le superalliage peut également comprendre, de manière avantageuse, en pourcentages massiques, 6,1 à 6,3% d'aluminium, 9,5 à 10,5% de cobalt, 4 à 5% de chrome, 0,1 à 0,2% de hafnium, 0,3 à 0,7% de molybdène, 3,7 à 4,5% de rhénium, 7,5 à 7,9% de tantale, 0,2 à 0,7% de titane, 3,2 à 4% de tungstène, 0 à 0,1% de silicium, le complément étant constitué de nickel et des impuretés inévitables.

Le superalliage peut également comprendre, de manière avantageuse, en pourcentages massiques, 6,1 à 6,5% d'aluminium, 9,5 à 10,5% de cobalt, 4 à 5% de chrome, 0,1 à 0,2% de hafnium, 0,3 à 0,7% de molybdène, 3,7 à 4,5% de rhénium, 7,5 à 7,9% de tantale, 0,3 à 0,6% de titane, 3,2 à 4% de tungstène, 0 à 0,1% de silicium, le complément étant constitué de nickel et des impuretés inévitables.

Le superalliage peut également comprendre, de manière avantageuse, en pourcentages massiques, 6,1 à 6,3% d'aluminium, 9,5 à 10,5% de cobalt, 4 à 5% de chrome, 0,1 à 0,2% de hafnium, 0,3 à 0,7% de molybdène, 3,7 à 4,5% de rhénium, 7,5 à 7,9% de tantale, 0,3 à 0,6% de titane, 3,2 à 4% de tungstène, 0 à 0,1% de silicium, le complément étant constitué de nickel et des impuretés inévitables.

De manière avantageuse, le superalliage peut comprendre, en pourcentages massiques, 6,1 à 6,5% d'aluminium, 9,5 à 10% de cobalt, 4 à 5% de chrome, 0,1 à 0,2% de hafnium, 0,3 à 0,7% de molybdène, 3,7 à 4,5% de rhénium, 7,5 à 7,9% de tantale, 0,3 à 0,6% de titane, 3,2 à 4% de tungstène, 0 à 0,1% de silicium, le complément étant constitué de nickel et des impuretés inévitables.

De manière avantageuse, le superalliage peut comprendre, en pourcentages massiques, 6,1 à 6,3% d'aluminium, 9,5 à 10% de cobalt, 4 à 5% de chrome, 0,1 à 0,2% de hafnium, 0,3 à 0,7% de molybdène, 3,7 à 4,5% de rhénium, 7,5 à 7,9% de tantale, 0,3 à 0,6% de titane, 3,4 à 3,8% de tungstène, 0 à 0,1% de silicium, le complément étant constitué de nickel et des impuretés inévitables.

Le superalliage peut également comprendre, en pourcentages massiques, 6,1 à 6,3% d'aluminium, 9,5 à 10% de cobalt, 4 à 5% de chrome, 0,1 à 0,2% de hafnium, 0,3 à 0,7% de molybdène, 3,7 à 4,5% de rhénium, 7,5 à 7,9% de tantale, 0,3 à 0,6% de titane, 3,2 à 4% de tungstène, 0 à 0,1% de silicium, le complément étant constitué de nickel et des impuretés inévitables.

Le superalliage peut également comprendre, en pourcentages massiques, 6,1 à 6,3% d'aluminium, 9,5 à 10% de cobalt, 4 à 5% de chrome, 0,1 à 0,2% de hafnium, 0,3 à 0,7% de molybdène, 3,7 à 4,5% de rhénium, 7,5 à 7,9% de tantale, 0,3 à 0,6% de titane, 3,4 à 3,8% de tungstène, 0 à 0,1% de silicium, le complément étant constitué de nickel et des impuretés inévitables.

Le superalliage peut également comprendre, en pourcentages massiques, 6,1 à 6,3% d'aluminium, 9,5 à 10% de cobalt, 4 à 5% de chrome, 0,1 à 0,2% de hafnium, 0,3 à 0,7% de molybdène, 3,8 à 4,5% de rhénium, 7,5 à 7,9% de tantale, 0,3 à 0,6% de titane, 3,4 à 3,8% de tungstène, 0 à 0,1% de silicium, le complément étant constitué de nickel et des impuretés inévitables.

Le superalliage peut également comprendre, en pourcentages massiques, 6,1 à 6,3% d'aluminium, 9,5 à 10% de cobalt, 4 à 5% de chrome, 0,1 à 0,2% de hafnium, 0,3 à 0,7% de molybdène, 3,8 à 4,5% de rhénium, 7,6 à 7,9% de tantale, 0,3 à 0,6% de titane, 3,4 à 3,8% de tungstène, 0 à 0,1% de silicium, le complément étant constitué de nickel et des impuretés inévitables.

Le superalliage peut également comprendre, en pourcentages massiques, 6,1 à 6,3% d'aluminium, 9,5 à 10% de cobalt, 4,5 à 5% de chrome, 0,1 à 0,2% de hafnium, 0,3 à 0,7% de molybdène, 3,8 à 4,5% de rhénium, 7,6 à 7,9% de tantale, 0,3 à 0,6% de titane, 3,4 à 3,8% de tungstène, 0 à 0,1% de silicium, le complément étant constitué de nickel et des impuretés inévitables.

Le superalliage peut également comprendre, en pourcentages massiques, 6,1 à 6,3% d'aluminium, 9,5 à 10% de cobalt, 4,5 à 4,7% de chrome, 0,1 à 0,2% de hafnium, 0,3 à 0,7% de molybdène, 3,8 à 4,5% de rhénium, 7,6 à 7,9% de tantale, 0,3 à 0,6% de titane, 3,4 à 3,8% de tungstène, 0 à 0,1% de silicium, le complément étant constitué de nickel et des impuretés inévitables.

Le superalliage peut également comprendre, en pourcentages massiques, 6,1 à 6,3% d'aluminium, 9,5 à 10% de cobalt, 4,5 à 4,7% de chrome, 0,1 à 0,2% de hafnium, 0,3 à 0,7% de molybdène, 3,8 à 4,5% de rhénium, 7,6 à 7,9% de tantale, 0,35 à 0,55% de titane, 3,4 à 3,8% de tungstène, 0 à 0,1% de silicium, le complément étant constitué de nickel et des impuretés inévitables.

Le superalliage peut également comprendre, en pourcentages massiques, 6,1 à 6,3% d'aluminium, 9,5 à 10% de cobalt, 4,5 à 4,7% de chrome, 0,1 à 0,2% de hafnium, 0,3 à 0,7% de molybdène, 3,8 à 4,5% de rhénium, 7,8 à 7,9% de tantale, 0,35 à 0,55% de titane, 3,4 à 3,8% de tungstène, 0 à 0,1% de silicium, le complément étant constitué de nickel et des impuretés inévitables.

Le superalliage peut également comprendre, en pourcentages massiques, 6,1 à 6,3% d'aluminium, 9,5 à 10% de cobalt, 4,5 à 4,7% de chrome, 0,1 à 0,2% de hafnium, 0,4 à 0,6% de molybdène, 3,8 à 4,5% de rhénium, 7,8 à 7,9% de tantale, 0,35 à 0,55% de titane, 3,4 à 3,8% de tungstène, 0 à 0,1% de silicium, le complément étant constitué de nickel et des impuretés inévitables.

Le superalliage peut également comprendre, en pourcentages massiques, 6,1 à 6,3% d'aluminium, 9,5 à 10% de cobalt, 4,5 à 4,7% de chrome, 0,1 à 0,2% de hafnium, 0,4 à 0,6% de molybdène, 3,8 à 4,3% de rhénium, 7,8 à 7,9% de tantale, 0,35 à 0,55% de titane, 3,4 à 3,8% de tungstène, 0 à 0,1% de silicium, le complément étant constitué de nickel et des impuretés inévitables.

Le superalliage peut également comprendre, en pourcentages massiques, 6,1 à 6,3% d'aluminium, 9,5 à 10% de cobalt, 4,5 à 4,7% de chrome, 0,1 à 0,2% de hafnium, 0,4 à 0,6% de molybdène, 3,8 à 4,3% de rhénium, 7,8 à 7,9% de tantale, 0,35 à 0,55% de titane, 3,4 à 3,8% de tungstène, le complément étant constitué de nickel et des impuretés inévitables.

Le superalliage peut également comprendre, en pourcentages massiques, 6,2% d'aluminium, 9,75% de cobalt, 4,6% de chrome, 0,14% de hafnium, 0,5% de molybdène, 4,1% de rhénium, 7,9% de tantale, 0,45% de titane, 3,6% de tungstène, le complément étant constitué de nickel et des impuretés inévitables.

Le cobalt, le chrome, le tungstène, le molybdène et le rhénium participent principalement au durcissement de la phase $\gamma$, la matrice austénitique de structure CFC.

L'aluminium, le titane et le tantale favorisent la précipitation de la phase $\gamma$', la phase durcissante $Ni_3$ (Al, Ti, Ta) de structure cubique ordonnée $L1_2$.

Par ailleurs, le rhénium permet de ralentir les processus diffusifs, de limiter la coalescence de la phase $\gamma$', améliorant ainsi la résistance au fluage à haute température. Toutefois, la teneur en rhénium ne doit pas être trop importante afin de ne pas impacter négativement les propriétés mécaniques de la pièce en superalliage.

Les éléments réfractaires que sont le molybdène, le tungstène, le rhénium et le tantale permettent également de ralentir les mécanismes contrôlés par la diffusion, améliorant ainsi la résistance au fluage de la pièce en superalliage.

En outre, le chrome et l'aluminium permettent d'améliorer la résistance à l'oxydation et à la corrosion à haute température, notamment aux environs des 900°C pour la corrosion, et aux environs des 1100°C pour l'oxydaton.

L'addition de silicium et de hafnium permettent également d'optimiser la tenue à l'oxydation à chaud du superalliage en augmentant l'adhérence de la couche d'alumine $Al_2O_3$ qui se forme à la surface du superalliage à haute température en milieu oxydant.

Par ailleurs, le chrome et le cobalt permettent de diminuer la température de solvus $\gamma$' du superalliage.

Le cobalt est un élément chimiquement proche du nickel qui se substitue en partie au nickel pour former une solution solide dans la phase $\gamma$, permettant ainsi de renforcer la matrice $\gamma$, de réduire la sensibilité à la précipitation de phases topologiquement compactes, notamment les phases $\mu$, P, R, et $\sigma$, et les phases de Laves, et de réduire la sensibilité à la formation de zone de réaction secondaire (ZRS).

En outre, une très faible teneur en soufre du super alliage à base de nickel permet d'augmenter de manière importante la résistance à l'oxydation et à la corrosion à chaud, ainsi que la tenue à l'écaillage de la barrière thermique lorsque le super alliage est utilisé pour former une pièce revêtue d'une barrière thermique (par exemple une aube de turbine). Par très faible teneur en soufre on comprend ici une teneur inférieure ou égale à 2 ppm en masse, de préférence inférieure ou égale à 1 ppm en masse, et de manière encore plus préférentielle inférieure ou égale à 0,5 ppm en masse. Une telle concentration en soufre peut être obtenue par élaboration d'une coulée mère à basse teneur en soufre, ou par mise en oeuvre d'un procédé de désulfuration post coulée. Une telle concentration en soufre peut également être obtenue par élaboration d'une coulée mère à basse teneur en soufre, puis par mise en oeuvre d'un procédé de désulfuration post coulée.

Une telle composition de superalliage permet d'améliorer les propriétés de tenue mécanique à haute température (650°C-1200°C) des pièces fabriquées à partir dudit superalliage.

En outre, une telle composition de superalliage permet d'améliorer la fabrication en réduisant le risque de formation de défauts lors de la fabrication de la pièce, et notamment la formation de grains parasites de type « Freckles » lors de la solidification dirigée.

En effet, la composition de superalliage permet de réduire la sensibilité de la pièce à la formation de grains parasites « Freckles ». La sensibilité de la pièce à la formation de grains parasites « Freckles » est évaluée à l'aide du critère de Konter, noté NFP, qui est donné par l'équation (1) suivante:

[Math. 1]

$$(1) \quad NFP = \frac{[\%Ta + 1,5\,\%Hf + 0,5\%Mo - 0,5\%Ti\,]}{[\%W + 1,2\%Re]}$$

Où %Ta correspond à la teneur de tantale dans le superalliage, en pourcentage massique ; où %Hf correspond à la teneur de hafnium dans le superalliage, en pourcentage massique ; où %Mo correspond à la teneur de molybdène dans le superalliage, en pourcentage massique ; où %Ti correspond à la teneur de titane dans le superalliage, en pourcentage massique ; où %W correspond à la teneur de tungstène dans le superalliage, en pourcentage massique ;

et où %Re correspond à la teneur de rhénium dans le superalliage, en pourcentage massique.

La composition de superalliage permet d'obtenir un paramètre NFP supérieur ou égal à 0,7, valeur à partir de laquelle la formation de grains parasites « Freckles » est fortement réduite.

Par ailleurs, une telle composition de superalliage permet d'obtenir une masse volumique réduite, notamment une masse volumique inférieure à 8,4 g/cm$^3$.

Le tableau 1 ci-dessous donne la composition, en pourcentages massiques, de trois exemples de superalliages selon l'invention, les exemples 1 à 3, ainsi que des superalliages commerciaux ou de référence, les exemples 4 à 9. L'exemple 4 correspond au superalliage AM1, l'exemple 5 correspond au superalliage PWA 1484, l'exemple 6 correspond au superalliage CMSX-4, l'exemple 7 correspond au superalliage CMSX-4 Plus® Mod C, l'exemple 8 correspond au superalliage René®N6, et l'exemple 9 correspond au superalliage CMSX-10 K®.

[Table 1]

Tableau 1

| Alliages | Ni | Al | Ta | Ti | Ce | Cr | Mo | W | Re | Hf | Autres |
|---|---|---|---|---|---|---|---|---|---|---|---|
| Ex 1 | Balance | 6,2 | 7,9 | 0,45 | 9,75 | 4,6 | 0,5 | 3,6 | 4,1 | 0,17 | |
| Ex 2 | Balance | 6,2 | 7,9 | 0,45 | 9,75 | 4,6 | 0,5 | 3,6 | 4,1 | 0,12 | |
| Ex 3 | Balance | 6,2 | 7,9 | 0,45 | 9,75 | 4,6 | 0,5 | 3,6 | 4,1 | 0,12 | Si 0,1 |
| Ex 4 | Balance | 5,3 | 8 | 1,2 | 6,5 | 7,5 | 2 | 5,5 | 0 | 80,5 | |
| Ex 5 | Balance | 5,65 | 8,7 | 0 | 10 | 5 | 1,9 | 5,9 | 3 | 0,1 | |
| Ex 6 | Balance | 5,6 | 6,5 | 1 | 9,6 | 6,6 | 0,6 | 6,4 | 3 | 0,1 | |
| Ex 7 | Balance | 5,7 | 8 | 0,85 | 10 | 3,5 | 0,6 | 6 | 4,8 | 0,1 | |
| Ex 8 | Balance | 6 | 7,5 | 0 | 12,2 | 4,4 | 1,1 | 5,7 | 5,3 | 0,03 | 0,05 C + 0,004 B + 0,01 Y |
| Ex 9 | Balance | 5,7 | 8 | 8,2 | 3 | 2 | 0,4 | 5 | 6 | 0,15 | 0,1 Nb + 0,01Si |

Le tableau 2 donne des caractéristiques estimées des superalliages cités dans le tableau 1. Les caractéristiques données dans le tableau 2 sont la densité (la masse volumique), les différentes températures de transformation (le solvus, le solidus et le liquidus), la fraction molaire de la phase γ' à 700°C, 900°C, à 1050°C et à 1200°C, la fraction molaire des phases topologiquement compactes (PTC) à 900°C et à 1050°C.

[Table 2]

Tableau 2

| Alliages | Densité | Températures de transformation (°C) | | | Fraction molaire de phase $\gamma'$ (%mol) | | | | Fraction volumique de PTC (%mol) | |
|---|---|---|---|---|---|---|---|---|---|---|
| | | Solvus | Solidus | Liquidus | 700°C | 900°C | 1050°C | 1200°C | 900°C | 1050°C |
| Ex 1 | 8,73 | 1317 | 1326 | 1399 | 75 | 68 | 57 | 34 | 0 | 0 |
| Ex 2 | 8,73 | 1313 | 1332 | 1399 | 75 | 68 | 57 | 33 | 0 | 0 |
| Ex 3 | 8,74 | 1315 | 1327 | 1397 | 74 | 67 | 57 | 34 | 0,4 | 0 |
| Ex 4 | 8,63 | 1291 | 1301 | 1366 | 69 | 63 | 53 | 29 | 0,1 | 0 |
| Ex 5 | 8,89 | 1295 | 1337 | 1394 | 77 | 66 | 50 | 26 | 0,2 | 0 |
| Ex 6 | 8,76 | 1270 | 1310 | 1385 | 70 | 63 | 52 | 23 | 1,1 | 0 |
| Ex 7 | 8,95 | 1308 | 1319 | 1398 | 73 | 68 | 58 | 35 | 1,6 | 0,8 |
| Ex 8 | 8,92 | 1285 | 1335 | 1400 | 75 | 66 | 51 | 25 | 1,7 | 0,4 |
| Ex 9 | 8,96 | 1372 | 1382 | 1400 | 69 | 68 | 61 | 46 | 0,5 | 0,4 |

Les fractions molaires de phase γ' des alliages de l'invention (exemples 1 à 3) sont très élevées à 1200°C, environ 34%mol, traduisant ansi une grande stabilité des précipités durcissant, ce qui garantit des propriétés mécaniques élevées en température. Les fractions molaires des superalliages selon l'invention sont supérieures à celles des superalliages de référence des exemples 4, 5, 6 et 8 et similaires de celle du superalliage de l'exemple 7, le superalliage de l'exemple 7 étant connu pour ses très bonnes propriétés en fluage à haute température.

La fraction volumique de phases fragilisantes (PTC) qui est présente dans les alliages selon L'invention (exemples 1 à 3) est négligeable ou nulle à 900°C, et nulle à 1050°C, contrairement aux alliages de référence ces exemples 7 8 et 9, traduisant ainsi une forte stabilité de la microstructure aux températures cibles d'utilisation.

Le tableau 3 donne des caractéristiques estimées des superalliages cités dans le tableau 1. Les caractéristiques données dans le tableau 3 sont l'activité du chrome dans la phase γ à 900°C, et l'activité de l'aluminium dans la phase γ à 1100°C. Les activités du chrome et de l'aluminium dans la matrice γ sont une indication de la résistance à la corrosion et à l'oxydation, plus l'activité du chrome et l'activité de l'aluminium dans la matrice sont élevées, plus la résistance à la corrosion et à l'oxydation est élevée.

[Table 3]

Tableau 3

|  | Activité du Cr dans phase γ | Activité de l'Al dans phase γ |
|---|---|---|
| Alliages | 900°C | 1100°C |
| Ex 1 | 1,92 E-3 | 1,10 E-07 |
| Ex 2 | 1,89 E-3 | 1,08 E-07 |
| Ex 3 | 1,91 E-3 | 1,15 E-07 |
| Ex 4 | 3,78 E-3 | 9,96 E-08 |
| Ex 5 | 2,19 E-3 | 1,20 E-07 |
| Ex 6 | 3,05 E-3 | 1,28 E-07 |
| Ex 7 | 1,51 E-3 | 1,02 E-07 |
| Ex 8 | 1,80 E-3 | 1,48 E-07 |
| Ex 9 | 5,18 E-4 | 4,22 E-08 |

Les superalliages selon l'invention (exemples 1 à 3) ont des activités en chrome à 900°C supérieures aux alliages de référence des exemples 5 et 7, connus pour avoir une faible tenue à la corrosion.

Comme cela est illustré dans les tableaux 2, et 3, les superalliages selon l'invention possèdent des propriétés mécaniques au moins équivalente et voir supérieures à haute température aux alliages de l'état de la technique, tout en présentant une masse volumique plus faible et une résistance à la corrosion et à l'oxydation supérieure.

Les propriétés données dans les tableaux 2 et 3 sont estimées à l'aide de la méthode CALPHAD (CALculation of PHAse Diagrams).

La pièce en superalliage à base de nickel peut être réalisée par fonderie.

La fabrication par fonderie de la pièce est réalisée par fusion du superalliage, le superalliage liquide étant versé dans un moule afin d'être refroidi et solidifié. La fabrication par fonderie de la pièce peut par exemple être réalisée avec la technique de la cire perdue, notamment pour fabriquer une aube.

Par ailleurs, afin de réaliser une pièce monocristalline, notamment une aube, le procédé peut comprendre une étape de solidification dirigée. La solidification dirigée est réalisée en contrôlant le gradient thermique et la vitesse de solidification du superalliage, et en introduisant un germe monocristallin ou en utilisant un sélecteur de grain, afin d'éviter l'apparition de germes nouveaux en avant du front de solidification.

La solidification dirigée peut notamment permettre la fabrication d'une aube monocristalline dont la structure cristalline est orientée selon une direction cristallographique <001> qui est parallèle à la direction longitudinale de l'aube, c'est-à-dire selon la direction radiale de la turbomachine, une telle orientation offrant de meilleures propriétés mécaniques.

**Revendications**

1. Superalliage à base nickel comprenant, en pourcentages massiques, 5,9 à 6,5% d'aluminium, 9,5 à 10,5% de cobalt, 4 à 5% de chrome, 0,1 à 0,2% de hafnium, 0,3 à 0,7% de molybdène, 3,7 à 4,5% de rhénium, 7,5 à 8,5% de tantale, 0,2 à 0,7% de titane, 3,2 à 4% de tungstène, 0 à 0,1% de silicium, le complément étant constitué de nickel et des impuretés inévitables.

2. Superalliage selon la revendication 1, dans lequel ledit superalliage comprend, en pourcentages massiques, 6,1 à 6,5% d'aluminium, 9,5 à 10,5% de cobalt, 4 à 5% de chrome, 0,1 à 0,2% de hafnium, 0,3 à 0,7% de molybdène, 3,7 à 4,5% de rhénium, 7,5 à 8,5% de tantale, 0,2 à 0,7% de titane, 3,2 à 4% de tungstène, 0 à 0,1% de silicium, le complément étant constitué de nickel et des impuretés inévitables.

3. Superalliage selon la revendication 1, dans lequel ledit superalliage comprend, en pourcentages massiques, 5,9 à 6,5% d'aluminium, 9,5 à 10,5% de cobalt, 4 à 5% de chrome, 0,1 à 0,2% de hafnium, 0,3 à 0,7% de molybdène, 3,7 à 4,5% de rhénium, 7,5 à 7,9% de tantale, 0,2 à 0,7% de titane, 3,2 à 4% de tungstène, 0 à 0,1% de silicium, le complément étant constitué de nickel et des impuretés inévitables.

4. Superalliage selon la revendication 2 ou la revendication 3, dans lequel ledit superalliage comprend, en pourcentages massiques, 6,1 à 6,5% d'aluminium, 9,5 à 10,5% de cobalt, 4 à 5% de chrome, 0,1 à 0,2% de hafnium, 0,3 à 0,7% de molybdène, 3,7 à 4,5% de rhénium, 7,5 à 7,9% de tantale, 0,2 à 0,7% de titane, 3,2 à 4% de tungstène, 0 à 0,1% de silicium, le complément étant constitué de nickel et des impuretés inévitables.

5. Superalliage selon la revendication 4, dans lequel ledit superalliage comprend, en pourcentages massiques, 6,1 à 6,5% d'aluminium, 9,5 à 10% de cobalt, 4 à 5% de chrome, 0,1 à 0,2% de hafnium, 0,3 à 0,7% de molybdène, 3,7 à 4,5% de rhénium, 7,5 à 7,9% de tantale, 0,2 à 0,7% de titane, 3,2 à 4% de tungstène, 0 à 0,1% de silicium, le complément étant constitué de nickel et des impuretés inévitables.

6. Superalliage selon la revendication 5, dans lequel ledit superalliage comprend, en pourcentages massiques, 6,1 à 6,3% d'aluminium, 9,5 à 10% de cobalt, 4 à 5% de chrome, 0,1 à 0,2% de hafnium, 0,3 à 0,7% de molybdène, 3,7 à 4,5% de rhénium, 7,5 à 7,9% de tantale, 0,2 à 0,7% de titane, 3,2 à 4% de tungstène, 0 à 0,1% de silicium, le complément étant constitué de nickel et des impuretés inévitables.

7. Superalliage selon la revendication 6, dans lequel ledit superalliage comprend, en pourcentages massiques, 6,1 à 6,3% d'aluminium, 9,5 à 10% de cobalt, 4 à 5% de chrome, 0,1 à 0,2% de hafnium, 0,3 à 0,7% de molybdène, 3,7 à 4,5% de rhénium, 7,5 à 7,9% de tantale, 0,3 à 0,6% de titane, 3,2 à 4% de tungstène, 0 à 0,1% de silicium, le complément étant constitué de nickel et des impuretés inévitables.

8. Superalliage selon la revendication 5, dans lequel ledit superalliage comprend, en pourcentages massiques, 6,1 à 6,5% d'aluminium, 9,5 à 10% de cobalt, 4 à 5% de chrome, 0,1 à 0,2% de hafnium, 0,3 à 0,7% de molybdène, 3,7 à 4,5% de rhénium, 7,5 à 7,9% de tantale, 0,3 à 0,6% de titane, 3,2 à 4% de tungstène, 0 à 0,1% de silicium, le complément étant constitué de nickel et des impuretés inévitables.

9. Superalliage selon la revendication 7 ou la revendication 8, dans lequel ledit superalliage comprend, en pourcentages massiques, 6,1 à 6,3% d'aluminium, 9,5 à 10% de cobalt, 4 à 5% de chrome, 0,1 à 0,2% de hafnium, 0,3 à 0,7% de molybdène, 3,7 à 4,5% de rhénium, 7,5 à 7,9% de tantale, 0,3 à 0,6% de titane, 3,4 à 3,8% de tungstène, 0 à 0,1% de silicium, le complément étant constitué de nickel et des impuretés inévitables.

10. Superalliage selon la revendication 9, dans lequel ledit superalliage comprend, en pourcentages massiques, 6,1 à 6,3% d'aluminium, 9,5 à 10% de cobalt, 4 à 5% de chrome, 0,1 à 0,2% de hafnium, 0,3 à 0,7% de molybdène, 3,8 à 4,5% de rhénium, 7,5 à 7,9% de tantale, 0,3 à 0,6% de titane, 3,4 à 3,8% de tungstène, 0 à 0,1% de silicium, le complément étant constitué de nickel et des impuretés inévitables.

11. Superalliage selon la revendication 10, dans lequel ledit superalliage comprend, en pourcentages massiques, 6,1 à 6,3% d'aluminium, 9,5 à 10% de cobalt, 4,5 à 4,7% de chrome, 0,1 à 0,2% de hafnium, 0,3 à 0,7% de molybdène, 3,8 à 4,5% de rhénium, 7,6 à 7,9% de tantale, 0,35 à 0,55% de titane, 3,4 à 3,8% de tungstène, 0 à 0,1% de silicium, le complément étant constitué de nickel et des impuretés inévitables.

12. Superalliage selon l'une quelconque des revendications 1 à 11, dans lequel le superalliage comprend une teneur en soufre inférieure ou égale à 2ppm en masse.

13. Pièce de turbomachine en superalliage à base de nickel selon l'une quelconque des revendications 1 à 12.

14. Pièce selon la revendication 13, dans laquelle ladite pièce est monocristalline.

15. Procédé de fabrication d'une pièce de turbomachine en superalliage à base de nickel selon l'une quelconque des revendications 1 à 12 par fonderie.

**Patentansprüche**

1. Superlegierung auf Nickelbasis, umfassend in Massenprozentsätzen 5,9 bis 6,5 % Aluminium, 9,5 bis 10,5 % Kobalt, 4 bis 5 % Chrom, 0,1 bis 0,2 % Hafnium, 0,3 bis 0,7 % Molybdän, 3,7 bis 4,5 % Rhenium, 7,5 bis 8,5 % Tantal, 0,2 bis 0,7 % Titan, 3,2 bis 4 % Wolfram, 0 bis 0,1 % Silizium, wobei der Rest aus Nickel und unvermeidlichen Verunreinigungen besteht.

2. Superlegierung nach Anspruch 1, wobei die Superlegierung in Massenprozentsätzen 6,1 bis 6,5 % Aluminium, 9,5 bis 10,5 % Kobalt, 4 bis 5 % Chrom, 0,1 bis 0,2 % Hafnium, 0,3 bis 0,7 % Molybdän, 3,7 bis 4,5 % Rhenium, 7,5 bis 8,5 % Tantal, 0,2 bis 0,7 % Titan, 3,2 bis 4 % Wolfram, 0 bis 0,1 % Silizium umfasst, wobei der Rest aus Nickel und unvermeidlichen Verunreinigungen besteht.

3. Superlegierung nach Anspruch 1, wobei die Superlegierung in Massenprozentsätzen 5,9 bis 6,5 % Aluminium, 9,5 bis 10,5 % Kobalt, 4 bis 5 % Chrom, 0,1 bis 0,2 % Hafnium, 0,3 bis 0,7 % Molybdän, 3,7 bis 4,5 % Rhenium, 7,5 bis 7,9 % Tantal, 0,2 bis 0,7 % Titan, 3,2 bis 4 % Wolfram, 0 bis 0,1 % Silizium umfasst, wobei der Rest aus Nickel und unvermeidlichen Verunreinigungen besteht.

4. Superlegierung nach Anspruch 2 oder Anspruch 3, wobei die Superlegierung in Massenprozentsätzen 6,1 bis 6,5 % Aluminium, 9,5 bis 10,5 % Kobalt, 4 bis 5 % Chrom, 0,1 bis 0,2 % Hafnium, 0,3 bis 0,7 % Molybdän, 3,7 bis 4,5 % Rhenium, 7,5 bis 7,9 % Tantal, 0,2 bis 0,7 % Titan, 3,2 bis 4 % Wolfram, 0 bis 0,1 % Silizium umfasst, wobei der Rest aus Nickel und unvermeidlichen Verunreinigungen besteht.

5. Superlegierung nach Anspruch 4, wobei die Superlegierung in Massenprozentsätzen 6,1 bis 6,5 % Aluminium, 9,5 bis 10 % Kobalt, 4 bis 5 % Chrom, 0,1 bis 0,2 % Hafnium, 0,3 bis 0,7 % Molybdän, 3,7 bis 4,5 % Rhenium, 7,5 bis 7,9 % Tantal, 0,2 bis 0,7 % Titan, 3,2 bis 4 % Wolfram, 0 bis 0,1 % Silizium umfasst, wobei der Rest aus Nickel und unvermeidlichen Verunreinigungen besteht.

6. Superlegierung nach Anspruch 5, wobei die Superlegierung in Massenprozentsätzen 6,1 bis 6,3 % Aluminium, 9,5 bis 10 % Kobalt, 4 bis 5 % Chrom, 0,1 bis 0,2 % Hafnium, 0,3 bis 0,7 % Molybdän, 3,7 bis 4,5 % Rhenium, 7,5 bis 7,9 % Tantal, 0,2 bis 0,7 % Titan, 3,2 bis 4 % Wolfram, 0 bis 0,1 % Silizium umfasst, wobei der Rest aus Nickel und unvermeidlichen Verunreinigungen besteht.

7. Superlegierung nach Anspruch 6, wobei die Superlegierung in Massenprozentsätzen 6,1 bis 6,3 % Aluminium, 9,5 bis 10 % Kobalt, 4 bis 5 % Chrom, 0,1 bis 0,2 % Hafnium, 0,3 bis 0,7 % Molybdän, 3,7 bis 4,5 % Rhenium, 7,5 bis 7,9 % Tantal, 0,3 bis 0,6 % Titan, 3,2 bis 4 % Wolfram, 0 bis 0,1 % Silizium umfasst, wobei der Rest aus Nickel und unvermeidlichen Verunreinigungen besteht.

8. Superlegierung nach Anspruch 5, wobei die Superlegierung in Massenprozentsätzen 6,1 bis 6,5 % Aluminium, 9,5 bis 10 % Kobalt, 4 bis 5 % Chrom, 0,1 bis 0,2 % Hafnium, 0,3 bis 0,7 % Molybdän, 3,7 bis 4,5 % Rhenium, 7,5 bis 7,9 % Tantal, 0,3 bis 0,6 % Titan, 3,2 bis 4 % Wolfram, 0 bis 0,1 % Silizium umfasst, wobei der Rest aus Nickel und unvermeidlichen Verunreinigungen besteht.

9. Superlegierung nach Anspruch 7 oder Anspruch 8, wobei die Superlegierung in Massenprozentsätzen 6,1 bis 6,3 % Aluminium, 9,5 bis 10 % Kobalt, 4 bis 5 % Chrom, 0,1 bis 0,2 % Hafnium, 0,3 bis 0,7 % Molybdän, 3,7 bis 4,5 % Rhenium, 7,5 bis 7,9 % Tantal, 0,3 bis 0,6 % Titan, 3,4 bis 3,8 % Wolfram, 0 bis 0,1 % Silizium umfasst, wobei der Rest aus Nickel und unvermeidlichen Verunreinigungen besteht.

10. Superlegierung nach Anspruch 9, wobei die Superlegierung in Massenprozentsätzen 6,1 bis 6,3 % Aluminium, 9,5 bis 10 % Kobalt, 4 bis 5 % Chrom, 0,1 bis 0,2 % Hafnium, 0,3 bis 0,7 % Molybdän, 3,8 bis 4,5 % Rhenium, 7,5 bis 7,9 % Tantal, 0,3 bis 0,6 % Titan, 3,4 bis 3,8 % Wolfram, 0 bis 0,1 % Silizium umfasst, wobei der Rest aus Nickel und unvermeidlichen Verunreinigungen besteht.

11. Superlegierung nach Anspruch 10, wobei die Superlegierung in Massenprozentsätzen 6,1 bis 6,3 % Aluminium, 9,5 bis 10 % Kobalt, 4,5 bis 4,7 % Chrom, 0,1 bis 0,2 % Hafnium, 0,3 bis 0,7 % Molybdän, 3,8 bis 4,5 % Rhenium, 7,6 bis 7,9 % Tantal, 0,35 bis 0,55 % Titan, 3,4 bis 3,8 % Wolfram, 0 bis 0,1 % Silizium umfasst, wobei der Rest aus Nickel und unvermeidlichen Verunreinigungen besteht.

12. Superlegierung nach einem der Ansprüche 1 bis 11, wobei die Superlegierung einen Schwefelgehalt von weniger als oder gleich wie 2 ppm (gewichtsbezogen) umfasst.

13. Turbomaschinenteil aus Superlegierung auf Nickelbasis nach einem der Ansprüche 1 bis 12.

14. Teil nach Anspruch 13, wobei das Teil monokristallin ist.

15. Verfahren zur Herstellung eines Turbomaschinenteils aus Superlegierung auf Nickelbasis nach einem der Ansprüche 1 bis 12 durch Gießen.

**Claims**

1. A nickel-based superalloy comprising, in weight percent, 5.9 to 6.5% aluminum, 9.5 to 10.5% cobalt, 4 to 5% chromium, 0.1 to 0.2% hafnium, 0.3 to 0.7% molybdenum, 3.7 to 4.5% rhenium, 7.5 to 8.5% tantalum, 0.2 to 0.7% titanium, 3.2 to 4% tungsten, 0 to 0.1% silicon, the balance consisting of nickel and unavoidable impurities.

2. The superalloy as claimed in claim 1, wherein said superalloy comprises, in weight percent, 6.1 to 6.5% aluminum, 9.5 to 10.5% cobalt, 4 to 5% chromium, 0.1 to 0.2% hafnium, 0.3 to 0.7% molybdenum, 3.7 to 4.5% rhenium, 7.5 to 8.5% tantalum, 0.2 to 0.7% titanium, 3.2 to 4% tungsten, 0 to 0.1% silicon, the balance being nickel and unavoidable impurities.

3. The superalloy as claimed in claim 1, wherein said superalloy comprises, in weight percent, 5.9 to 6.5% aluminum, 9.5 to 10.5% cobalt, 4 to 5% chromium, 0.1 to 0.2% hafnium, 0.3 to 0.7% molybdenum, 3.7 to 4.5% rhenium, 7.5 to 7.9% tantalum, 0.2 to 0.7% titanium, 3.2 to 4% tungsten, 0 to 0.1% silicon, the balance being nickel and unavoidable impurities.

4. The superalloy as claimed in claim 2 or claim 3, wherein said superalloy comprises, in weight percent, 6.1 to 6.5% aluminum, 9.5 to 10.5% cobalt, 4 to 5% chromium, 0.1 to 0.2% hafnium, 0.3 to 0.7% molybdenum, 3.7 to 4.5% rhenium, 7.5 to 7.9% tantalum, 0.2 to 0.7% titanium, 3.2 to 4% tungsten, 0 to 0.1% silicon, the balance consisting of nickel and unavoidable impurities.

5. The superalloy as claimed in claim 4, wherein said superalloy comprises, in weight percent, 6.1 to 6.5% aluminum, 9.5 to 10% cobalt, 4 to 5% chromium, 0.1 to 0.2% hafnium, 0.3 to 0.7% molybdenum, 3.7 to 4.5% rhenium, 7.5 to 7.9% tantalum, 0.2 to 0.7% titanium, 3.2 to 4% tungsten, 0 to 0.1% silicon, the balance being nickel and unavoidable impurities.

6. The superalloy as claimed in claim 5, wherein said superalloy comprises, in weight percent, 6.1 to 6.3% aluminum, 9.5 to 10% cobalt, 4 to 5% chromium, 0.1 to 0.2% hafnium, 0.3 to 0.7% molybdenum, 3.7 to 4.5% rhenium, 7.5 to 7.9% tantalum, 0.2 to 0.7% titanium, 3.2 to 4% tungsten, 0 to 0.1% silicon, the balance being nickel and unavoidable impurities.

7. The superalloy as claimed in claim 6, wherein said superalloy comprises, in weight percent, 6.1 to 6.3% aluminum, 9.5 to 10% cobalt, 4 to 5% chromium, 0.1 to 0.2% hafnium, 0.3 to 0.7% molybdenum, 3.7 to 4.5% rhenium, 7.5 to 7.9% tantalum, 0.3 to 0.6% titanium, 3.2 to 4% tungsten, 0 to 0.1% silicon, the balance being nickel and unavoidable impurities.

8. The superalloy as claimed in claim 5, wherein said superalloy comprises, in weight percent, 6.1 to 6.5% aluminum, 9.5 to 10% cobalt, 4 to 5% chromium, 0.1 to 0.2% hafnium, 0.3 to 0.7% molybdenum, 3.7 to 4.5% rhenium, 7.5 to 7.9% tantalum, 0.3 to 0.6% titanium, 3.2 to 4% tungsten, 0 to 0.1% silicon, the balance being nickel and unavoidable impurities.

9. The superalloy as claimed in claim 7 or claim 8, wherein said superalloy comprises, in weight percent, 6.1 to 6.3% aluminum, 9.5 to 10% cobalt, 4 to 5% chromium, 0.1 to 0.2% hafnium, 0.3 to 0.7% molybdenum, 3.7 to 4.5% rhenium, 7.5 to 7.9% tantalum, 0.3 to 0.6% titanium, 3.4 to 3.8% tungsten, 0 to 0.1% silicon, the balance consisting of nickel and unavoidable impurities.

10. The superalloy as claimed in claim 9, wherein said superalloy comprises, in weight percent, 6.1 to 6.3% aluminum, 9.5 to 10% cobalt, 4 to 5% chromium, 0.1 to 0.2% hafnium, 0.3 to 0.7% molybdenum, 3.8 to 4.5% rhenium, 7.5 to 7.9% tantalum, 0.3 to 0.6% titanium, 3.4 to 3.8% tungsten, 0 to 0.1% silicon, the balance being nickel and unavoidable impurities.

11. The superalloy as claimed in claim 10, wherein said superalloy comprises, in weight percent, 6.1 to 6.3% aluminum, 9.5 to 10% cobalt, 4.5 to 4.7% chromium, 0.1 to 0.2% hafnium, 0.3 to 0.7% molybdenum, 3.8 to 4.5% rhenium, 7.6 to 7.9% tantalum, 0.35 to 0.55% titanium, 3.4 to 3.8% tungsten, 0 to 0.1% silicon, the balance consisting of nickel and unavoidable impurities.

12. The superalloy as claimed in any one of claims 1 to 11, wherein the superalloy comprises a sulfur content of less than or equal to 2 ppm by weight.

13. A turbomachinery part made of nickel-based superalloy as claimed in any one of claims 1 to 12.

14. The part as claimed in claim 13, wherein said part is singlecrystal.

15. A process for manufacturing a turbomachinery part made of nickel-based superalloy as claimed in any one of claims 1 to 12 by casting.

**EP 3 918 101 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2018078269 A
- FR 1760675
- FR 2018052840 W